# EUROPEAN PATENT SPECIFICATION

(11) **EP 3 383 712 B1**
(45) Date of publication and mention of the grant of the patent: **19.02.2020**
(21) Application number: 15804543.5
(22) Date of filing: 04.12.2015
(51) Int. Cl.: B60S 1/38

(54) **WINDSCREEN WIPER DEVICE**
SCHEIBENWISCHERVORRICHTUNG
DISPOSITIF D'ESSUIE-GLACE

(43) Date of publication of application: 10.10.2018
(73) Proprietor: Federal-Mogul S.A., 6790 Aubange (BE)
(72) Inventor: LALLEMAND, Valentin, 55160 Marchéville-en-Woëvre (BE)
(74) Representative: Hooiveld, Arjen Jan Winfried
(86) International application number: PCT/EP2015/078685
(87) International publication number: WO 2017/092827

(56) References cited:
- DE-A1-102011 116 815
- DE-A1-102012 100 879
- US-A1- 2012 117 746
- US-A1- 2012 291 216

## Description

The present invention relates to a windscreen wiper device of the flat blade type, particularly for automobiles, comprising an elastic, elongated carrier element, as well as an elongated wiper blade of a flexible material, which can be placed in abutment with a windscreen to be wiped, which wiper blade includes at least one longitudinal groove, in which groove at least one longitudinal strip of the carrier element is disposed, which windscreen wiper device comprises a connecting device for an oscillating arm, wherein said oscillating arm can be pivotally connected to said connecting device about a pivot axis near one end thereof. Particularly, said oscillating arm can be pivotally connected to said connecting device with the interposition of a joint part. More in particular, said wiper blade comprises a spoiler at a side thereof facing away from the windscreen to be wiped, wherein said wiper blade and said spoiler are preferably made in one piece through extrusion. Said longitudinal groove is preferably a central longitudinal groove accommodating said longitudinal strip. Said longitudinal strip is also called a "flexor", while said connecting device is also indicated as a "connector". In the framework of the present invention said connector is preferably made in one piece, also called a "one piece connector".

Document US 2012/0291216 A1 is considered to be the prior art closest to the subject-matter of the independent claims.

Such a windscreen wiper device is generally known. This prior art windscreen wiper device is designed as a so-called "flat blade" or "yokeless blade", wherein no use is made of several yokes pivotally connected to each other, but wherein the wiper blade is biassed by the carrier element, as a result of which it exhibits a specific curvature. The spoiler is also called an "air deflector". In cold conditions, such as in freezing conditions, for example in winter time, the wiper blade of the known windscreen wiper device may lose (some of) its flexibility, so that wiping properties are deteriorated. Also, said wiper blade may be blocked by snow and/or ice, resulting in a bad wiping performance. Also, snow and/or ice may prevent a wiping lip of said wiper blade to tumble over at each turning point of its oscillatory movement, leading to a significant "rattling" noise and chatter. Said wiping lip may even freeze onto a windscreen to be wiped resulting in a damage of the flexible material of the wiper blade.

The object of the invention is to provide an improved windscreen wiper device. More in particular, the present invention aims to keep the wiping properties of the wiper blade thereof at a constant high level, also in cold (freezing) conditions.

In order to accomplish that objective, a windscreen wiper device of the type referred to in the introduction is characterized according to the invention in that an electrically conductive coating is provided on at least a part of the flexible material of the wiper blade along at least a portion of its length in order to transfer electrically generated heat to the wiper blade upon applying a voltage to the electrically conductive coating. By applying the electrically conductive coating on a skin of the wiper blade it is possible to subject said coating to a voltage, so that said skin will heat up. The skin will then transfer its heat to other parts of the wiper blade in order to melt any snow and/or ice on the wiper blade. Particularly, in case the electrically conductive coating would have an electrical resistance of 6 or 12 Ohm, a voltage of 12 V or 24 V, respectively (dependent on the type of car), would be applied thereon to heat up the skin of the wiper blade. Said coating is preferably provided along the entire length of said wiper blade.

It is noted that the present invention is not restricted to the use of only one longitudinal strip forming the elastic carrier element that is particularly located in a central longitudinal groove of the wiper blade. Instead, said carrier element may also comprise two longitudinal strips, wherein said strips are disposed in opposite longitudinal grooves of the wiper blade. Said groove(s) may be closed at one outer end.

Further, it is noted that in the invention use is made of a mounting head fixed for rotation to a shaft, wherein said shaft is rotatable alternately in a clockwise and in a counter-clockwise sense carrying said mounting head into rotation. Thus, in turn said mounting head draws said connecting device into rotation and thereby moves said wiper blade. In the alternative, said mounting head is fixed for translation to a carriage, wherein said carriage can be translated alternately in a one linear direction and in another counter linear direction carrying said mounting head into translation. The present invention can therefore be used for circular or linear movement of said mounting head.

In a preferred embodiment of a windscreen wiper device in accordance with the present invention said electrically conductive coating is provided on an elongated lower wiping part of said wiper blade including a wiping lip thereof and facing away from an upper holding part of said wiper blade holding said longitudinal strip. Thus, the wiper blade consists of an elongated upper holding part and an elongated lower wiping part, wherein said upper holding part holds said longitudinal strip and wherein said wiping part comprises said wiping lip, and wherein said upper holding part and said lower wiping part are interconnected by means of a tilting web acting as an intermediate part subjected to a force in accordance with the wiping direction. Particularly, said tilting web is strip-shaped, whereas said wiping lip is triangular in shape. Instead of or in addition to applying said electrically conductive coating onto the triangular-shaped wiping lip said electrically conductive coating is provided on the elongated upper holding part of said wiper blade holding said longitudinal strip and facing away from the lower wiping part of said wiper blade comprising the wiping lip thereof. In the latter case said electrically conductive coating is particularly provided on a spoiler provided on said upper holding part. Said elongated upper holding part and said elongated lower wiping part are preferably made in one piece through extrusion. In another preferred embodiment said elongated upper holding part and said elongated lower wiping part are separate parts connected together.

In another preferred embodiment of a windscreen wiper device according to the present invention said upper holding part comprises at least one channel extending along at least a portion of the length of the wiper blade, wherein an electrically conductive wire is disposed inside said channel for applying a voltage to the electrically conductive coating, and wherein said electrically conductive wire is in electrical contact with said electrically conductive coating. Preferably, said channel is located inside said upper holding part at a side thereof opposite to an air deflecting front side thereof and at a side of said groove facing away from a windscreen to be wiped. In another preferred embodiment there are two of these channels located on opposite lateral sides of said groove. Said channel preferably extends along the entire length of said wiper blade.

In another preferred embodiment of a windscreen wiper device in accordance with the present invention at least two electrically conductive wires are provided on said upper holding part of said wiper blade on opposite sides thereof for applying a voltage to the electrically conductive coating, wherein said electrically conductive wires are in electrical contact with said electrically conductive coating. Particularly, said electrically conductive wires are located at opposite lateral sides of said groove. More in particular, said electrically conductive wires are inkjet on the flexible material of said wiper blade. In another preferred embodiment said electrically conductive wires are deposited with another method, such as serigraphy or paint rolling.

In another preferred embodiment of a windscreen wiper device according to the present invention said electrically conductive coating is an ink or paint containing Cu, Al or Ag, or any combination thereof. In an alternative also other very conductive materials may be used.

In the embodiments having (a) wire(s) the connecting device is preferably equipped with an electrical connection element to connect the wire(s) to a voltage generator.

As said earlier, said carrier element consists of one longitudinal strip disposed in a central longitudinal groove of said wiper blade. In the alternative, said carrier element consists of two longitudinal strips disposed in opposing longitudinal grooves of said wiper blade.

The present invention also relates to a process for manufacturing a windscreen wiper device comprising an elastic, elongated carrier element, as well as an elongated wiper blade of a flexible material, which can be placed in abutment with a windscreen to be wiped, which wiper blade includes at least one longitudinal groove, in which groove at least one longitudinal strip of the carrier element is disposed, which windscreen wiper device comprises a connecting device for an oscillating arm, wherein said oscillating arm is pivotally connected to said connecting device about a pivot axis near one end thereof, with the special feature that an electrically conductive coating is applied on at least a part of the flexible material of the wiper blade along at least a portion of its length in order to transfer electrically generated heat to the wiper blade upon applying a voltage to the electrically conductive coating.

The invention will now be explained more in detail with reference to figures illustrated in a drawing, wherein
- figure 1 is a perspective, schematic view of a preferred embodiment of a windscreen wiper device according to the invention; and
- figures 2 through 5 are a side and a perspective view of a wiper blade of the windscreen wiper device of figure 1 explaining the working principle, according to four embodiments, respectively, as to how to heat a electrically conductive coating applied on a spoiler of the wiper blade; and
- figure 6 is a side view of a wiper blade of the windscreen wiper blade referring to a fifth embodiment.

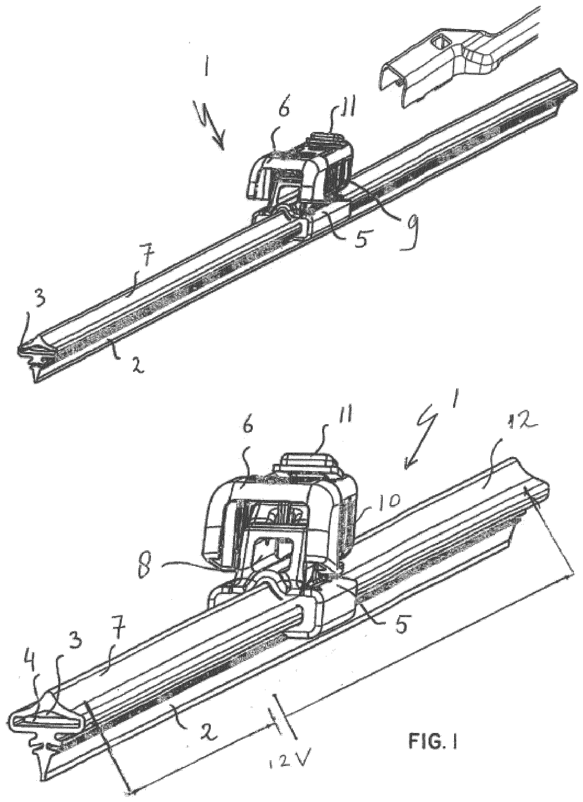

Figures 1 shows a preferred variant of a windscreen wiper device 1 according to the invention. Said windscreen wiper device 1 is built up of an elastomeric wiper blade 2 comprising a central longitudinal groove 3, wherein a longitudinal strip 4 made of spring band steel is fitted in said longitudinal groove 3. Said strip 4 forms a flexible carrier element for the rubber wiper blade 2, as it were, which is thus biassed in a curved position (the curvature in operative position being that of a windscreen to be wiped). The windscreen wiper device 1 is furthermore built up of a connecting device 5 of metal or plastic for connecting an oscillating wiper arm thereto, with the interposition of a joint part 6. The oscillating wiper arm is pivotally connected to the connecting device 5 about a pivot axis near one end. The preferred embodiment of figure 1 according to the invention comprises a spoiler or "air deflector" 7 which is made in one piece with the rubber wiper blade 2 and which extends along the entire length thereof. No end caps are used, but free ends of said wiper blade 2 are cut at an oblique angle. In the alternative end caps may be used

Although not shown in figure 1, but fully understood by a skilled person, said oscillating arm is connected to a mounting head fixed for rotation to a shaft driven by a small motor. In use, the shaft rotates alternately in a clockwise and in a counter-clockwise sense carrying the mounting head into rotation also, which in turn draws said oscillating arm into rotation and by means of said connecting device 5 moves said wiper blade 2.

Said connecting device 5 further comprises an interior space 8 functioning as a water channel extending in longitudinal direction of said connecting device 5. During use said water channel 8 transports rain water therethrough. In other words, in use rain water is carried away from a first side of said connecting device 5 facing away from said free end of said oscillating arm to a second side of said connecting device 5 facing towards said free end of said oscillating arm. As a result of the oscillatory movement of said oscillating arm, in practice an over pressure relative to the environment exists at the location of said first side of said connecting device 5, while an under pressure relative to the environment is present at the location of said second side of said connecting device 5. Due to said over pressure and said under pressure rain water is "automatically" pressed through said water channel.

Said joint part 6 is detachably connected to said connecting device 5 by engaging protrusions 9 of said connecting device 5, at the location of said pivot axis, in co-axial recesses 10 provided in said joint part 6. As shown, said protrusions 8 extend outwards on either side of said connecting device 5. The joint part 6 comprises a resilient tongue 11 extending outwardly, while the oscillating arm has a U-shaped cross-section at the location of its connection to said joint part 6, so that the tongue 11 engages in an identically shaped hole provided in a base of said U-shaped cross-section. The connecting device 5 with the wiper blade 2 is mounted onto the oscillating arm as follows. The joint part 6 being already clipped onto the connecting device 5 is pivoted relative to the connecting device 5, so that said joint part 6 can be easily slided on a free end of the oscillating arm. During this sliding movement the resilient tongue 11 is initially pushed in against a spring force and then allowed to spring back into said hole in said oscillating arm, thus snapping, that is clipping the resilient tongue 11 into the hole of the oscillating arm. This is a so-called bayonet-connection. The oscillating arm together with the joint part 6 may then be pivoted back in a position parallel to the wiper blade 2 in order to be ready for use. By subsequently pushing in again said resilient tongue 11 against the spring force (as if it were a push button), the connecting device 5 and the joint part 6 together with the wiper blade 2 may be released from the oscillating arm. Dismounting the connecting device 5 with the wiper blade 2 from the oscillating arm is thus realized by sliding the connecting device 5 and the joint part 6 together with the wiper blade 2 in a direction away from the oscillating arm.

According to the invention an electrically conductive coating 12 is disposed onto the spoiler 7 over the entire length of the wiper blade 2. In use a voltage of 12V or 24 V is applied across the electrically conductive coating 12 at both ends of the wiper blade 2, as shown.

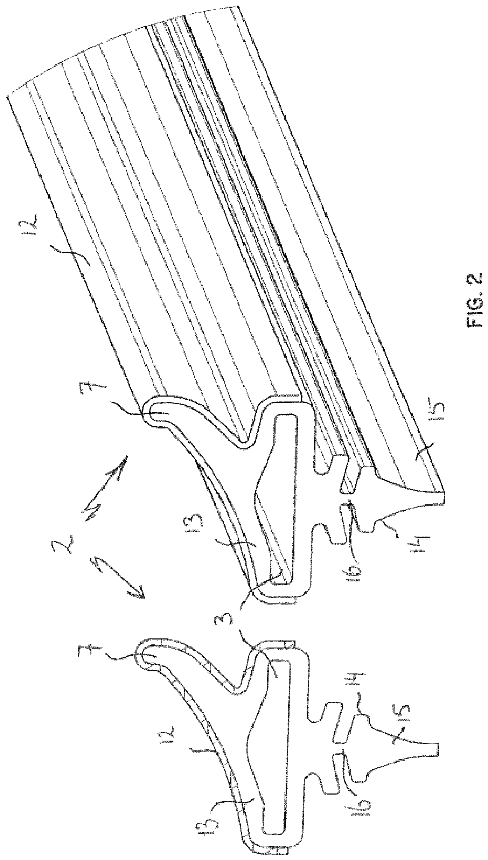

Figures 2 through 5 show a side and a perspective view of the wiper blade 2 of the windscreen wiper device of figure 1 according to four embodiments, respectively, explaining the working principle as to how to heat the electrically conductive coating 12 applied on the spoiler 7 of the wiper blade 2. As shown, the wiper blade 2 consists of an elongated upper holding part 13 and an elongated lower wiping part 14, wherein said upper holding part 13 holds said longitudinal strip 4 and wherein said lower wiping part comprises a wiping lip 15. Said upper holding part 13 and said lower wiping part 14 are interconnected by means of a tilting web 16 acting as an intermediate part subjected to a force in accordance with the wiping direction.

In the first embodiment of figures 1 and 2 a voltage is applied across the coating 12 along the entire length of the wiper blade.

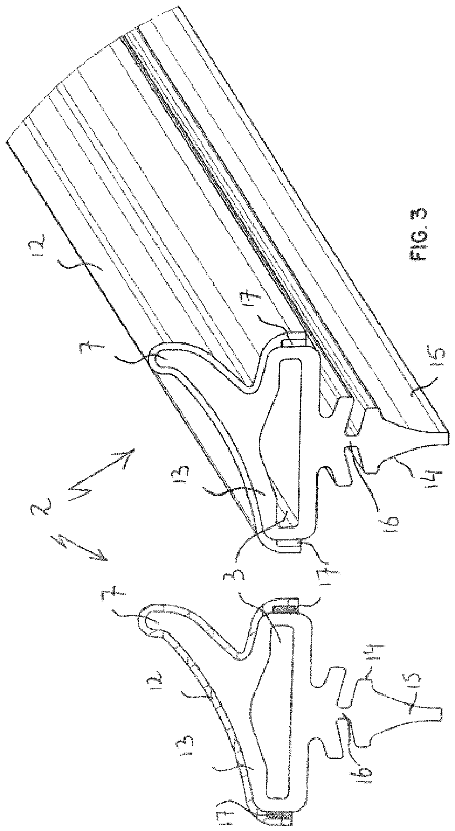

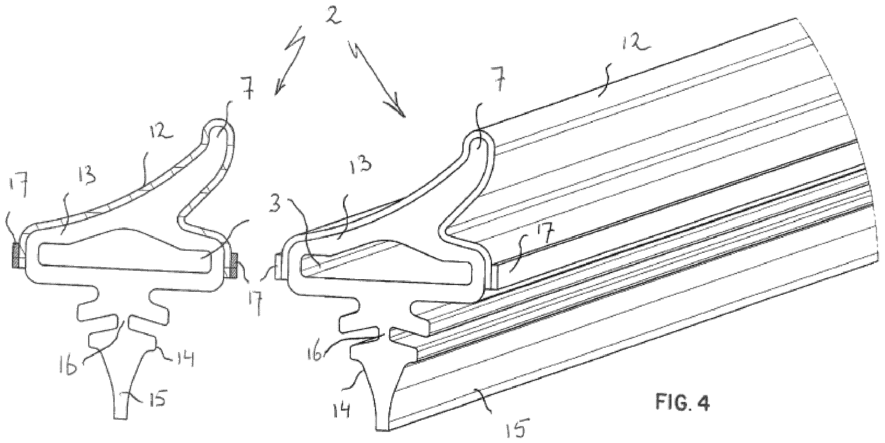

In the second alternative embodiment of figure 3 two electrically conductive wires or electrodes 17 are provided on said upper holding part 13 of said wiper blade 2 on opposite sides thereof and at opposite lateral sides of said groove 3. These wires 17 make contact with said electrically conductive coating 12 and serve to apply a voltage of 12 V, for example, to the electrically conductive coating 12. Figure 4 shows a similar arrangement referring to a third embodiment, wherein the electrically conductive coating 12 is interposed between said wires 17 and the opposite lateral sides of said groove 3.

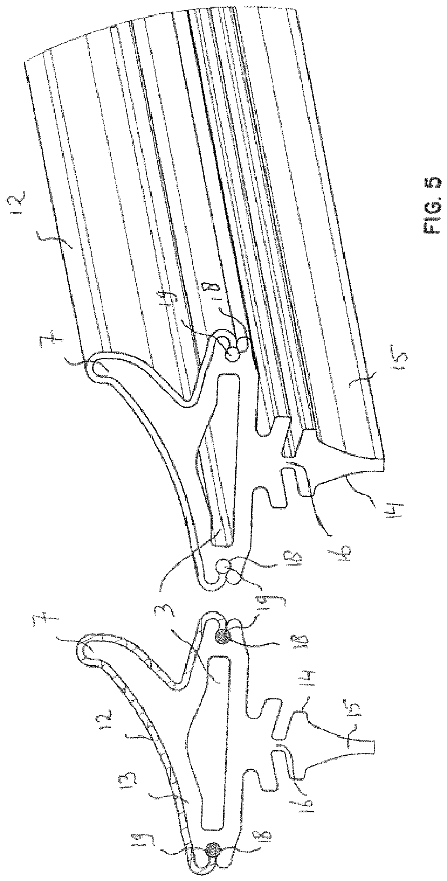

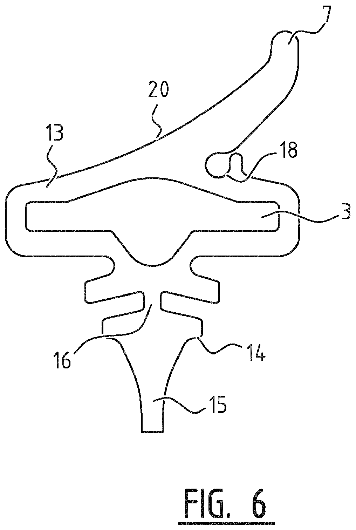

In the fifth alternative embodiment of figure 5 said upper holding part 13 comprises channels 18 extending along the entire length of the wiper blade 2. Inside said channels 18 electrically conductive wires or electrodes 19 being in electrical contact with said electrically conductive coating 12 are mounted for applying a voltage of 12 V, for example, to the electrically conductive coating 12. As depicted, said channels 18 are located at opposite lateral sides of said groove 3. Figure 6 shows an arrangement according to a six embodiment, wherein said channel 18 is located inside said upper holding part 13 at a side thereof opposite to an air deflecting front side 20 thereof and at a side of said groove 3 facing away from a windscreen to be wiped. In figure 6 the coating 12 and the wire/electrode 19 are not visible.

In the embodiments of figures 3 through 6 the connecting device 5 comprises an electrical connection element to connect the electrically conductive wires 17,19 to a voltage generator.

The invention is not restricted to the variants shown in the drawing, but it also extends to other preferred embodiments that fall within the scope of the appended claims.

## Claims

1. A windscreen wiper device (1) of the flat blade type, comprising an elastic, elongated carrier element, as well as an elongated wiper blade (2) of a flexible material, which can be placed in abutment with a windscreen to be wiped, which wiper blade (2) includes at least one longitudinal groove (3), in which groove (3) at least one longitudinal strip (4) of the carrier element is disposed, which windscreen wiper device (1) comprises a connecting device (6) for an oscillating arm (7), wherein said oscillating arm (7) is pivotally connected to said connecting device (6) about a pivot axis near one end thereof, **characterized in that** an electrically conductive coating (12) is provided on at least a part of the flexible material of the wiper blade (2) along at least a portion of its length in order to transfer electrically generated heat to the wiper blade (2) upon applying a voltage to the electrically conductive coating (12).

2. A windscreen wiper device (1) according to claim 1, wherein said electrically conductive coating (12) is provided on an elongated lower wiping part (14) of said wiper blade (2) including a wiping lip thereof and facing away from an upper holding part (13) of said wiper blade (2) holding said longitudinal strip (4).

3. A windscreen wiper device (1) according to claim 1 or 2, wherein said electrically conductive coating (12) is provided on an elongated upper holding part (13) of said wiper blade (2) holding said longitudinal strip (4) and facing away from a lower wiping part (14) of said wiper blade (2) including a wiping lip thereof.

4. A windscreen wiper device (1) according to claim 3, wherein said electrically conductive coating (12) is provided on a spoiler (7) provided on said upper holding part (13).

5. A windscreen wiper device (1) according to claim 3 or 4, wherein said upper holding part (13) comprises at least one channel (18) extending along at least a portion of the length of the wiper blade (2), wherein an electrically conductive wire (19) is disposed inside said channel (18) for applying a voltage to the electrically conductive coating (12), and wherein said electrically conductive wire (19) is in electrical contact with said electrically conductive coating (12).

6. A windscreen wiper device (1) according to claim 5, wherein said channel (18) is located inside said upper holding part (13) at a side thereof opposite to an air deflecting front side thereof and at a side of said groove (3) facing away from a windscreen to be wiped.

7. A windscreen wiper device (1) according to claim 5, wherein two channels (18) are provided located at opposite lateral sides of said groove (3).

8. A windscreen wiper device (1) according to any of the preceding claims 3 through 7, wherein at least two electrically conductive wires (17) are provided on said upper holding part (13) of said wiper blade (2) on opposite sides thereof for applying a voltage to the electrically conductive coating (12), and wherein said electrically conductive wires (17) are in electrical contact with said electrically conductive coating (2).

9. A windscreen wiper device (1) according to claim 8, wherein said electrically conductive wires (17) are located at opposite lateral sides of said groove (3).

10. A windscreen wiper device (1) according to claim 8 or 9, wherein said electrically conductive wires (17) are disposed on the flexible material of said wiper blade (2) .

11. A windscreen wiper device (1) according to any of the preceding claims 1 through 10, wherein said electrically conductive coating (12) is an ink or paint.

12. A windscreen wiper device (1) according to claim 11, wherein said ink or paint contains Cu, Al or Ag, or any combination thereof.

13. A windscreen wiper device (1) according to any of the preceding claims 1 through 12, wherein said carrier element consists of one longitudinal strip (4) disposed in a central longitudinal groove (3) of said wiper blade (2) .

14. A windscreen wiper device (1) according to any of the preceding claims 1 through 12, wherein said carrier element consists of two longitudinal strips (4) disposed in opposing longitudinal grooves (3) of said wiper blade (2) .

15. A process for manufacturing a windscreen wiper device (1) of the flat blade type comprising an elastic, elongated carrier element, as well as an elongated wiper blade (2) of a flexible material, which can be placed in abutment with a windscreen to be wiped, which wiper blade (2) includes at least one longitudinal groove (3), in which groove (3) at least one longitudinal strip (4) of the carrier element is disposed, which windscreen wiper device (1) comprises a connecting device (6) for an oscillating arm (7), wherein said oscillating arm (7) is pivotally connected to said connecting device (6) about a pivot axis near one end thereof, **characterized in that** electrically conductive coating (12) is applied on at least a part of the flexible material of the wiper blade (2) along at least a portion of its length in order to transfer electrically generated heat to the wiper blade (2) upon applying a voltage to the electrically conductive coating (12).

## Patentansprüche

1. Scheibenwischervorrichtung (1) des Flachblatttyps, umfassend ein biegsames, längliches Trägerelement, sowie ein längliches Wischerblatt (2) eines flexiblen Materials, das in Angrenzung mit einer zu wischenden Scheibe platziert werden kann, wobei das Wischerblatt (2) wenigstens eine Längsnut (3) beinhaltet, wobei in der Nut (3) wenigstens eine Längsleiste (4) des Trägerelements angeordnet ist, wobei die Scheibenwischervorrichtung (1) eine Verbindungsvorrichtung (6) für einen sich hin und her bewegenden Arm (7) umfasst, wobei der sich hin und her bewegende Arm (7) schwenkbar um eine Schwenkachse mit der Verbindungsvorrichtung (6) in der Nähe eines Endes davon verbunden ist, **dadurch gekennzeichnet, dass** eine elektrisch leitfähige Beschichtung (12) auf wenigstens einem Teil des flexiblen Materials des Wischerblatts (2) entlang wenigstens eines Abschnitts von dessen Länge bereitgestellt ist, um elektrisch erzeugte Hitze auf das Wischerblatt (2) beim Anlegen einer Spannung an die elektrisch leitfähige Beschichtung (12) zu übertragen.

2. Scheibenwischervorrichtung (1) nach Anspruch 1, wobei die elektrisch leitfähige Beschichtung (12) auf einem länglichen unteren Wischteil (14) des Wischerblatts (2) bereitgestellt ist, beinhaltend eine Wischlippe davon und abgewandt von einem oberen Halteteil (13) des Wischerblatts (2), haltend die Längsleiste (4).

3. Scheibenwischervorrichtung (1) nach Anspruch 1 oder 2, wobei die elektrisch leitfähige Beschichtung (12) auf einem länglichen oberen Halteteil (13) des Wischerblatts (2) bereitgestellt ist, haltend die Längsleiste (4) und abgewandt von einem unteren Wischteil (14) des Wischerblatts (2), beinhaltend eine Wischlippe davon.

4. Scheibenwischervorrichtung (1) nach Anspruch 3, wobei die elektrisch leitfähige Beschichtung (12) auf einem Spoiler (7) bereitgestellt ist, bereitgestellt an dem oberen Halteteil (13).

5. Scheibenwischervorrichtung (1) nach Anspruch 3 oder 4, wobei das obere Halteteil (13) wenigstens einen Kanal (18) umfasst, der sich entlang wenigstens eines Abschnitts der Länge des Wischerblatts (2) erstreckt, wobei ein elektrisch leitfähiger Draht (19) im Innern des Kanals (18) zum Anlegen einer Spannung an die elektrisch leitfähige Beschichtung (12) angeordnet ist, und wobei der elektrisch leitfähige Draht (19) in elektrischem Kontakt mit der elektrisch leitfähigen Beschichtung (12) ist.

6. Scheibenwischervorrichtung (1) nach Anspruch 5, wobei sich der Kanal (18) im Innern des oberen Halteteils (13) an einer Seite davon befindet, gegenüberliegend einer luftumleitenden Vorderseite davon, und an einer Seite der Nut (3), abgewandt von einer zu wischenden Scheibe.

7. Scheibenwischervorrichtung (1), nach Anspruch 5, wobei zwei Kanäle (18) sich befindend an gegenüberliegenden lateralen Seiten der Nut (3) bereitgestellt sind.

8. Scheibenwischervorrichtung (1) nach einem der vorhergehenden Ansprüche 3 bis 7, wobei wenigstens zwei elektrisch leitfähige Drähte (17) an dem oberen Halteteil (13) des Wischerblatts (2) an gegenüberliegenden Seiten davon zum Anlegen einer Spannung an die elektrisch leitfähige Beschichtung (12) bereitgestellt sind, und wobei die elektrisch leitfähigen Drähte (17) in elektrischem Kontakt mit der elektrisch leitfähigen Beschichtung (2) ist.

9. Scheibenwischervorrichtung (1) nach Anspruch 8, wobei sich die elektrisch leitfähigen Drähte (17) an gegenüberliegenden lateralen Seiten der Nut (3) befinden.

10. Scheibenwischervorrichtung (1) nach Anspruch 8 oder 9, wobei die elektrisch leitfähigen Drähte (17) auf dem flexiblen Material des Wischerblatts (2) angeordnet sind.

11. Scheibenwischervorrichtung (1) nach einem der vorhergehenden Ansprüche 1 bis 10, wobei die elektrisch leitfähige Beschichtung (12) eine Tinte oder Farbe ist.

12. Scheibenwischervorrichtung (1) nach Anspruch 11, wobei die Tinte oder Farbe Cu, Al oder Ag oder eine Kombination davon enthält.

13. Scheibenwischervorrichtung (1) nach einem der vorhergehenden Ansprüche 1 bis 12, wobei das Trägerelement aus einer Längsleiste (4) besteht, angeordnet in einer zentralen länglichen Nut (3) des Wischerblatts (2).

14. Scheibenwischervorrichtung (1) nach einem der vorhergehenden Ansprüche 1 bis 12, wobei das Trägerelement aus zwei Längsleisten (4) besteht, angeordnet in gegenüberliegenden länglichen Nuten (3) des Wischerblatts (2).

15. Verfahren zum Herstellen einer Scheibenwischervorrichtung (1) des Flachblatttyps, umfassend ein biegsames, längliches Trägerelement, sowie ein längliches Wischerblatt (2) eines flexiblen Materials, das in Angrenzung mit einer zu wischenden Scheibe platziert werden kann, wobei das Wischerblatt (2) wenigstens eine Längsnut (3) beinhaltet, wobei in der Nut (3) wenigstens eine Längsleiste (4) des Trägerelements angeordnet wird, wobei die Scheibenwischervorrichtung (1) eine Verbindungsvorrichtung (6) für einen sich hin und her bewegenden Arm (7) umfasst, wobei der sich hin und her bewegende Arm (7) schwenkbar um eine Schwenkachse mit der Verbindungsvorrichtung (6) in der Nähe eines Endes davon verbunden wird, **dadurch gekennzeichnet, dass** elektrisch leitfähige Beschichtung (12) auf wenigstens einem Teil des flexiblen Materials des Wischerblatts (2) entlang wenigstens eines Abschnitts von dessen Länge aufgebracht wird, um elektrisch erzeugte Hitze auf das Wischerblatt (2) beim Anlegen einer Spannung an die elektrisch leitfähige Beschichtung (12) zu übertragen.

## Revendications

1. Dispositif d'essuie-glace (1) de type à balai plat, comprenant un élément de support élastique, allongé, ainsi qu'un balai d'essuie-glace allongé (2) en matériau flexible, qui peut être placé en butée contre un pare-brise à essuyer, lequel balai d'essuie-glace (2) comprend au moins une rainure longitudinale (3), dans laquelle rainure (3), est disposée au moins une bande longitudinale (4) de l'élément de support, lequel dispositif d'essuie-glace (1) comprend un dispositif de raccordement (6) pour un bras oscillant (7), dans lequel ledit bras oscillant (7) est monté de manière pivotante sur ledit dispositif de raccordement (6) autour d'un axe de pivot à proximité de son extrémité, **caractérisé en ce qu'**un revêtement électriquement conducteur (12) est prévu sur au moins une partie du matériau flexible du balai d'essuie-glace (2) le long d'au moins une partie de sa longueur afin de transférer la chaleur générée électriquement au balai d'essuie-glace (2) après l'application d'une tension sur le revêtement électriquement conducteur (12).

2. Dispositif d'essuie-glace (1) selon la revendication 1, dans lequel ledit revêtement électriquement conducteur (12) est prévu sur une partie d'essuyage inférieure allongée (14) dudit balai d'essuie-glace (2) comprenant sa lèvre d'essuyage et orientée à l'opposé d'une partie de support supérieure (13) dudit balai d'essuie-glace (2) maintenant ladite bande longitudinale (4).

3. Dispositif d'essuie-glace (1) selon la revendication 1 ou 2, dans lequel ledit revêtement électriquement conducteur (12) est prévu sur une partie de support supérieure allongée (13) dudit balai d'essuie-glace (2) maintenant ladite bande longitudinale (4) et orientée à l'opposé d'une partie d'essuyage inférieure (14) dudit balai d'essuie-glace (2) comprenant sa lèvre d'essuyage.

4. Dispositif d'essuie-glace (1) selon la revendication 3, dans lequel ledit revêtement électriquement conducteur (12) est prévu sur un déflecteur (7) prévu sur ladite partie de support supérieure (13).

5. Dispositif d'essuie-glace (1) selon la revendication 3 ou 4, dans lequel ladite partie de support supérieure (13) comprend au moins un canal (18) s'étendant le long d'au moins une partie de la longueur du balai d'essuie-glace (2), dans lequel un fil électriquement conducteur (19) est disposé à l'intérieur dudit canal (18) pour appliquer une tension sur le revêtement électriquement conducteur (12), et dans lequel ledit fil électriquement conducteur (19) est en contact électrique avec ledit revêtement électriquement conducteur (12).

6. Dispositif d'essuie-glace (1) selon la revendication 5, dans lequel ledit canal (18) est positionné à l'intérieur de ladite partie de support supérieure (13) au niveau de son côté opposé à son côté avant de déviation d'air et au niveau d'un côté de ladite rainure (3) orienté à l'opposé d'un pare-brise à essuyer.

7. Dispositif d'essuie-glace (1) selon la revendication 5, dans lequel on prévoit deux canaux (18) positionnés au niveau des côtés latéraux opposés de ladite rainure (3).

8. Dispositif d'essuie-glace (1) selon l'une quelconque des revendications 3 à 7, sans lequel au moins deux fils électriquement conducteurs (17) sont prévus sur ladite partie de support supérieure (13) dudit balai d'essuie-glace (2) sur ses côtés opposés pour appliquer une tension sur le revêtement électriquement conducteur (12), et dans lequel lesdits fils électriquement conducteurs (17) sont en contact électrique avec ledit revêtement électriquement conducteur (2).

9. Dispositif d'essuie-glace (1) selon la revendication 8, dans lequel lesdits fils électriquement conducteurs (17) sont positionnés sur les côtés latéraux opposés de ladite rainure (3).

10. Dispositif d'essuie-glace (1) selon la revendication 8 ou 9, dans lequel lesdits fils électriquement conducteurs (17) sont disposés sur le matériau flexible dudit balai d'essuie-glace (2).

11. Dispositif d'essuie-glace (1) selon l'une quelconque des revendications 1 à 10, dans lequel ledit revêtement électriquement conducteur (12) est une encre ou une peinture.

12. Dispositif d'essuie-glace (1) selon la revendication 11, dans lequel ladite encre ou peinture comprend du Cu, Al ou Ag ou l'une quelconque de leur combinaison.

13. Dispositif d'essuie-glace (1) selon la revendication 1, selon l'une quelconque des revendications 1 à 12, dans lequel ledit élément de support se compose d'une bande longitudinale (4) disposée dans une rainure longitudinale centrale (3) dudit balai d'essuie-glace (2).

14. Dispositif d'essuie-glace (1) selon l'une quelconque des revendications 1 à 12, dans lequel ledit élément de support se compose de deux bandes longitudinales (4) disposées dans des rainures longitudinales (3) opposées dudit balai d'essuie-glace (2).

15. Procédé pour fabriquer un dispositif d'essuie-glace (1) du type à balai plat comprenant un élément de support élastique, allongé, ainsi qu'un balai d'essuie-glace allongé (2) en matériau flexible, qui peut être placé en butée contre un pare-brise à essuyer, lequel balai d'essuie-glace (2) comprend au moins une rainure longitudinale (3), dans laquelle rainure (3), est disposée au moins une bande longitudinale (4) de l'élément de support, lequel dispositif d'essuie-glace (1) comprend un dispositif de raccordement (6) pour un bras oscillant (7), dans lequel ledit bras oscillant (7) est raccordé de manière pivotante audit dispositif de raccordement (6) autour d'un axe de pivot à proximité de son extrémité, **caractérisé en ce que** le revêtement électriquement conducteur (12) est appliqué sur au moins une partie du matériau flexible du balai d'essuie-glace (2) le long d'au moins une partie de sa longueur afin de transférer la chaleur générée électriquement sur le balai d'essuie-glace (2) suite à l'application d'une tension sur le revêtement électriquement conducteur (12).
